(19) Europäisches Patentamt
European Patent Office
Office européen des brevets

(11) **EP 2 725 387 A1**

(12) **EUROPEAN PATENT APPLICATION**
published in accordance with Art. 153(4) EPC

(43) Date of publication:
**30.04.2014 Bulletin 2014/18**

(21) Application number: **12803240.6**

(22) Date of filing: **15.06.2012**

(51) Int Cl.:
*G01V 1/18* (2006.01)        *G01V 1/22* (2006.01)

(86) International application number:
**PCT/CN2012/000831**

(87) International publication number:
**WO 2012/174855 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2011  CN 201110167832**

(71) Applicants:
• **Institute of Geology and Geophysics, Chinese Academy of Sciences Beijing 100029 (CN)**
• **Beijing Geophysics Technology Co., Ltd. Beijing 100029 (CN)**

(72) Inventors:
• **GUO, Jian Beijing 100029 (CN)**
• **LIU, Guangding Beijing 100029 (CN)**
• **XU, Shanhui Beijing 100029 (CN)**
• **LIU, Ning Beijing 100029 (CN)**

(74) Representative: **Dilg, Haeusler, Schindelmann Patentanwaltsgesellschaft mbH Leonrodstraße 58 80636 München (DE)**

(54) **MILLION CHANNEL-CLASS DIGITAL SEISMOMETER BASED ON COMPUTER NETWORK**

(57)    This invention relates to a novel million-channel digital seismic recorder based on a computer network, whose hardware comprises seven units, including the central control operation system (CCOS), the root unit (RU), the network unit (NU), the power unit (PU), the acquisition string (AS), the fiber line (FL) and the network line (NL). In which the CCOS is the control centre and the data receiving centre of the whole apparatus, the RU is the interface for connecting the CCOS and the field equipment. The RU is connected with one or more network unit string (NUS) which is formed by a number of NU connected in series through the FL. The PU and the AS are randomly connected in series to form an acquisition line (AL). Any PU on the AL is connected to the NU through a 100 Mbit NL. The above-mentioned field equipment comprises the NU, the PU, the AS and the FL. After fully considering the feature of the data transmission of the million-channel digital seismic recorder, the computer network is perfectly utilized to achieve a unique million-channel seismic acquiring instrument framework which has the features of flexibility in field layout, convenience in field operation, etc.

EP 2 725 387 A1

**Description**

FIELD OF THE INVENTION

This invention relates to a seismic recorder, in particular to a novel million-channel digital seismic recorder based on a computer network.

BACKGROUND OF THE INVENTION

A high-precision digital seismic recorder is the geological exploration instrument for recording artificial seismic signals or earthquake signals, thus finding the oil, gas, coal and other mineral resources according to these records of seismic signals; and it also can be used for detecting the internal structure of the earth, predicting engineering and geological disaster, etc.

The seismic exploration method is currently the main means of exploring petroleum and natural gas both on land and sea, as well as the key exploration method for other mineral resources; it is widely applied to the research of the inside structure of the earth, engineering exploration and detecting, predicting of geological disasters, etc. The method is basically to embed tens of thousands of seismic wave sensors (seismic geophones) in a targeted exploring area, and exciting artificial earthquake using explosive or controllable seismic source, then the seismic wave is transmitted into deep earth, and can be reflected while meeting the interfaces of the stratums with different properties; the seismic detectors collect the reflected wave and converts it into an analog electrical signal; the high-precision digital seismic recorder converts the analog electrical signal into a digital signal and records it. Mass data received by field exploration is processed by complex signal processing and inversion through an indoor high-speed computer, thus the clear and reliable image of the underground structure can be obtained, and the position and the depth of mineral resources can be determined at last.

Most of the instruments currently used in petroleum and natural gas exploration industries are the wired telemetry seismic recorders produced by France, America, etc. The wired telemetry seismic recorders are of characteristics to send commands and transmit the acquired data completely through a wired system, which play a dominate role in current actual field application, and they occupy the major market share of the seismic recorder market in the world, such as the 408/428 series of Sercel company, Scorpion and Aries systems of ION company, and Uni Q of American Western Geco, and so on.

The seismic acquisition system can be divided into three parts of seismic signal picking (seismic geophone), seismic signal transmission, and seismic signal record and storage. The main 24-bit telemetry seismic recorders in the world can be divided into three types including wired telemetry seismic recorder, wireless telemetry seismic recorder, and cable-less storage-model seismic recorder. The wired telemetry seismic recorder plays a dominate role in the three types of telemetry seismic recorders and occupies the major market in the world.

French Sercel held by CGG is a company specialized in the development of seismic instruments, and had fifty years of experience in manufacture of seismic instruments. The typical land seismic instruments: SN338, SN368, SN388, and the currently widely applied 400 series.

408U is a network seismic recorder, which was launched in the exploration market by Sercel in the late 1990s, and it integrates the acquisition station with the cable in form of an acquisition chain. 408UL system was the first one using the concept of seismic regional network, and its core idea is to introduce the concept of computer network node into the telemetry seismic recorder system so as to use the telemetry instrument system as a computer network. The host computer recording system, the LAUL and the LAUX are served as the network node for cooperating with the system software to implement the control and management. Data transmission speed of 408UL geophone line is 8.192MHz, and the crossline data transmission speed is 16.384MHz. The real-time trace capacity of the geophone line at 2ms sampling rate is 1000 channels, and the real-time trace capacity of the crossline is 2000 channels. Compared with 408UL, 428XL has a great improvement on the host computer system and the data transmission structure. The host computer structure adopts server/client mode, and the data transmission speed of the geophone line is 16.384MHz; the single wire has the capacity of transmission at 2000 channels/2ms; and the real-time three-dimensional capacity reaches 10000 channels/2ms.

American ION is the international well-known geophysical equipment manufacturer for manufacturing equipment such as seismic instruments, vibroseis, seismic geophone, exciting source synchronization system, etc. ION had started to manufacture seismic instruments in the 1980s, and its system-I and system-II instruments were highly welcomed by users. ION attached great importance to the research ahead of time of the product, and in recent years, has launched the 24-bit A/D seismic apparatus and Vectorseis digital geophones (MEMS), which have brought two steps new revolutionary progress on seismic instruments. The land seismic instruments produced by ION mainly include Scorpion and Aries system. In 2010, the land instruments branch of ION merged with BGP INC., China National Petroleum Corporation to form a new company named INOVA.

## SUMMARY OF THE INVENTION

The invention aims to provide a novel million-channel digital seismic recorder based on a computer network, which is applied to petroleum exploration, natural gas exploration, coal field exploration, mineral exploration, geological disaster monitoring, and earth interior structure survey, etc. It is a device can be used for detecting artificial seismic or earthquake signal, whilst it can convert the signal into digital signal and then be recorded.

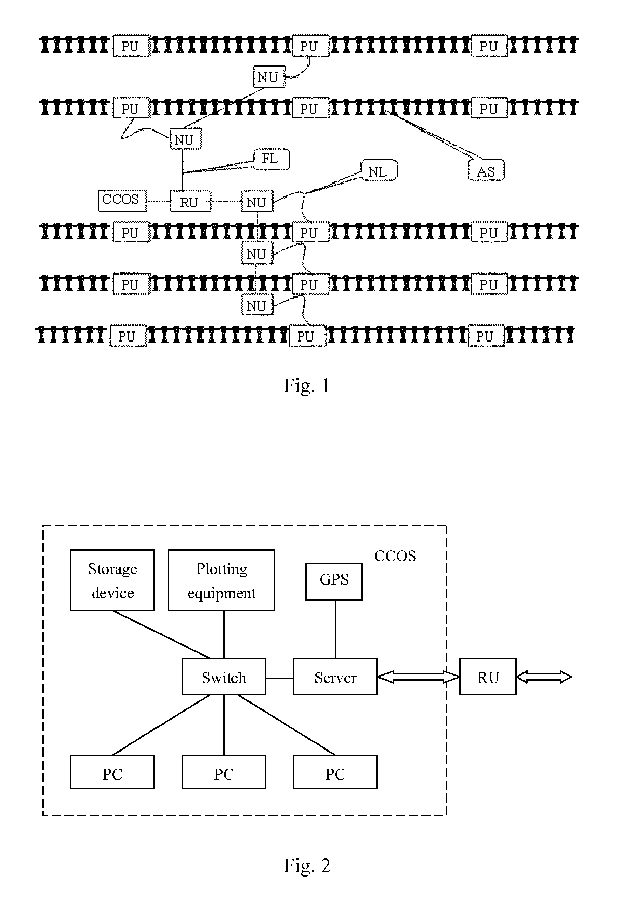

To achieve the purpose above, the hardware of the novel million-channel digital seismic recorder based on the computer network of the invention comprises seven units (Fig.1): the central control operation system (CCOS), the root unit (RU), the network unit (NU), the power unit (PU), the acquisition string (AS), the fiber line (FL) and the network line (NL). In which: The CCOS is the control centre and the data retrieving centre of the whole apparatus. The RU is the interface for connecting the CCOS and the field equipment, and the RU is connected with one or more network unit string (NUS) which is formed by a number of NU connected in series with the FL. The PU and the AS are randomly connected in series to form an Acquisition Line (AL), and any PU on the AL is connected to the NU through a 100 Mbit NL. The above-mentioned field equipment comprises the NU, the PU, the AS and the FL. In the other words, the CCOS is connected to one or more NUs through RU, wherein the NUS is formed by connecting a number of NU in series through the FL; the PU and the AS are randomly connected in series to form the AL, any PU on the AL is connected to the NU through the 100 Mbit NL. In full consideration of the feature of the data transmission of the million-channel digital seismic recorder, different computer networks are utilized to meet different requirements on data transmission so as to achieve the optimal configure on cost and power consumption and etc. and the special million-channel seismic acquiring instrument framework is achieved by using the computer network. The NU and the PU are connected through the special NL, so the NU in the NUS can be connected to any PU on the AL, and the layout flexibility of the field acquisition equipment can be greatly improved. The central control operation system CCOS is usually arranged on an instrument truck.

In aspect of optimization, the CCOS (Fig.2) mainly performs human-computer interaction, layout control, acquisition synchronizing, data recovery and quality control. The CCOS (it is usually mounted on an instrument truck) is the main control unit of the whole digital seismic recorder. The hardware mainly comprises computer server, switch, PCs, storage device, plotting equipment and GPS. The switch connects the storage device, the plotting equipment, the server of the GPS and several of PCs. The server is externally connected with the RU. The software mainly comprises operation system software and control operation software. The RU and the CCOS are connected through a 10-gigabit network line or a number of binding gigabit network lines.

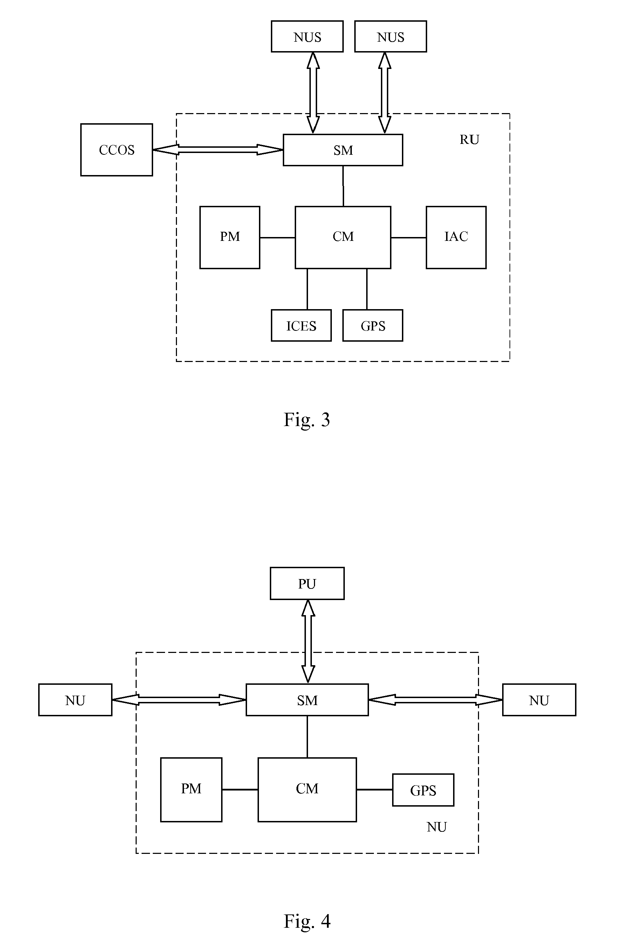

In aspect of optimization, the RU comprises a high-speed switch module (SM), a control module (CM), an interface to control explosive source (ICES), a power module (PM), an interface for auxiliary channels (IAC) and a GPS module. The RU is connected with the CCOS through a 10-gigabit network line or a number of binding gigabit network lines, and according to the capacity of the instrument it provides 2 to 10 gigabit fiber optical cable interfaces for connecting the field ground equipment such as NUS and the so on. The high-speed SM performs data switching. The CM performs control to the SM, ICES and the IAC according to the command of the CCOS. The PM provides power support to each module.(See Fig.3). The CM is connected with the SM, ICES, PM, IAC and the GPS module, respectively.

The high-speed SM adopts different configurations in the case of different numbers of channels. E.g. a 10-gigabit network line is connected with the CCOS in the case of 1 million channels, and 10 sets of gigabit fiber optic cable interfaces are provided to connect with the field ground equipment such as NUS and so on. Two binding gigabit network lines are connected with the CCOS in the case of 200000 channels, and two sets of gigabit fiber optical cable interfaces are provided to connect with the field ground equipment such as the NUS and so on. And the rest situations can be figure out on the same way. The CM performs control to the high-speed SM, the ICES and the IAC based on the command of the CCOS. The PM provides power support to each module.

The data flow of the seismic recorder is determined by the number of acquisition channel and the sampling rate. Herein 1 million channels and sampling rate of 2ms are adopted as the example for calculating the real-time data flow of the million-channel digital seismic recorder. At the sampling rate of 2ms, 500 sampling points can be achieved each second, and each data is sampled based on 20 bits, so the data flow of 1-million channel digital seismic recorder is 10Gb/s, which is shown as that:

$$\text{Total data flow} = \text{total number of channels} \times \text{number of sampling points per second} \times \text{bit per sampling point} = 1{,}000{,}000 \times 500 \times 20 = 10{,}000{,}000{,}000.$$

As a result, the RU connected with the CCOS through a 10-gigabit network line and connected with the filed ground equipment such as the NUS through 10 sets of gigabit fiber optical cable interfaces can basically meet the requirement of data transmission of the seismic recorder while acquiring at 1-million channels and 2ms sampling rate.

In aspect of optimization, the NU comprises the high-speed SM, the CM, the PM, the GPS module, etc. The SM is a 100-Mbit/gigabit switch module and the gigabit interface is respectively connected with previous NU and the next NU. The 100-Mbit interface is connected with the PU. The NU has two power supply modes: one is to supply power by directly connecting with the battery, and another one is to supply power through the PU by connecting through the special NL (See Fig.4). The CM is respectively connected with the high-speed SM, the PM and the GPS module.

In aspect of optimization, the NUS is formed by connecting a number ofNU in series through FL. The NUS is connected with the RU. The RU is connected with one or more NUS to form a backbone network for data transmission of the million-channel digital seismic recorder system.

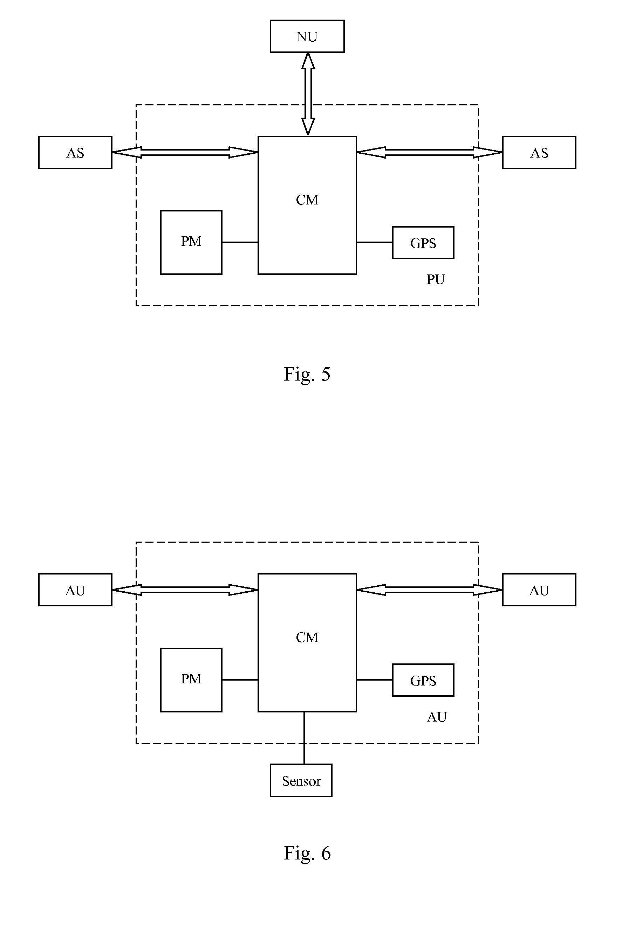

In aspect of optimization, the PU comprises the CM, the PM, the GPS module, etc. The CM has a 100-Mbit interface to connect the NU through the NL, and it can supply power to the NU through a special NL. The CM has two special communication interfaces for connecting the previous AS and the next AS, respectively (See Fig.5). The CM is respectively connected with the PM and the GPS module, and the CM is externally connected with the NU and the AS.

In aspect of optimization, the AL can be formed by connecting the PU and AS in series and connecting the AS and AS in series. The PU on the AL provides power supply to AU at two sides. The maximum number of AU between two PU is determined by the power supply capability of the PU.

The PU supplies power to the AU by raising the voltage of power supply battery from 12V to 48-72V. The power voltage of the AU is ranged from 24 to 72V due to the line loss, which means that in the system the PU supplies power to the AU by raising the voltage of the power supply storage battery from 12V to 48-72V. The power voltage of the AU is ranged from 24 to 72V due to the line loss.

In aspect of optimization, the layout flexibility of field acquisition equipment can be improved by connecting a number ofNU of one NUS and a number of PU on one AL under the optimization of control mode, or connecting a number of NU of many NUS and a number of PU on one AL. The data flow of the AL can be raised and as a result, the connection length of AL can be increased.

In aspect of optimization, the AU (Fig.6) of the novel digital seismic recorder comprises the CM, the PM, the GPS module, etc. The CM has two special communication interfaces for connecting the previous AU and the next AU, and provides a special interface for connecting common wave detector or MEMS or similar sensor. The power is supplied through the PU by using the communication interface under the "ghost pair" mode. The PM converts the supplied voltage of 24-72V into various voltages as the AU required (the power voltage will be reduced along with the distance of power supply under line loss, so the minimum power voltage of the AU is set as 24V).

In aspect of optimization, the AS is formed by connecting a number of acquisition units (AU) through cables. The AU acquires the signal of the digital geophone, and performs communication and data transmission through the special communication interface, which means that the AS in the seismic recorder is formed by connecting a number of acquisition units (AU) (6 to 12 AU are usually arranged for conveniently carrying in the field) through cables. The AU acquires the signal of the digital geophone, and performs communication and data transmission through the special communication interface.

By utilizing the technical scheme above, the seismic recorder of the invention utilizes different computer networks to meet the transmission requirement of different data transmission based on the full consideration of the feature of data transmission of the million-channel digital seismic recorder. 10-gigabit network is adopted to carry out data transmission between the host computer server and the RU. The gigabit optical fiber performs the data transmission of the backbone data network of the field components. 100 Mbit cable is utilized to carry out data transmission between the AL and the NU; and token ring network is adopted to implement real-time data transmission of the data acquisition string, so as to achieve the optimal configuration of the cost, the power consumption, etc. The seismic recorder of the invention is different from current seismic recorder in the world that the computer network is fully utilized to achieve a special million-channel seismic acquisition instrument framework, and it has the features of flexibility in field layout, and convenience in field operation, etc.

BRIEF DESCRIPTION OF THE FIGURES

Fig.1 shows the functional block diagram of the novel million-channel digital seismic recorder based on the computer network of the invention;

Fig.2 shows the functional block diagram of the CCOS of the seismic recorder of the invention;

Fig.3 shows the functional block diagram of the RU of the seismic recorder of the invention;

Fig.4. shows the functional block diagram of the NU of the seismic recorder of the invention;

Fig.5 shows the functional block diagram of the PU of the seismic recorder of the invention;

Fig.6 shows the functional block diagram of the AU of the seismic recorder of the invention.

## DETAILD DESCRIPTION OF THE INVENTION

The novel million-channel digital seismic recorder based on the computer network of the invention has the feature that different computer networks are utilized to meet the transmission requirement of different data based on the full consideration of the feature of data transmission of the million-channel digital seismic recorder. The gigabit optical fiber is adopted to carry out data transmission of the backbone data network. 100 Mbit cable is utilized to perform data transmission of the secondary data network, and a special communication mode is carried out to achieve the real-time data transmission of the data acquisition string, so that the optimal configuration of the cost, the power consumption, etc. can be achieved. The seismic recorder of the invention is different from current seismic recorder in the world as that the computer network is fully utilized to achieve a special million-channel seismic acquisition instrument framework, and it has the features of flexibility in field layout, and convenience in field operation, etc., details are as follows:

The hardware of the novel million-channel digital seismic recorder based on the computer network of the invention comprises seven units (see Fig. 1) comprising a central control operation system (CCOS), a root unit (RU), a network unit (NU), a power unit (PU), an acquisition string (AS), fiber line (FL), network line (NL), etc.

The RU (see Fig.1) of the novel digital seismic recorder of the invention is the interface for connecting the CCOS and field equipment (NU, PU, AS, FL, etc,), and it is connected with the CCOS through a 10-gigabit network line or a number of binding gigabit network lines. A number of NU can be connected in series through the FL to form a network unit string (NUS), and connected with RU. The RU can be connected to form one or more NUS. The PU and the AS are randomly connected in series to form an acquisition line (AL). Any PU on the AL is connected to the NU through a 100 Mbit NL.

The CCOS (see Fig.2) in the digital seismic recorder of the invention is the control centre and the data recovery centre of the whole instrument and it performs human-computer interaction, layout control, acquisition synchronizing, data retrieving, quality control and so on. The CCOS is usually arranged on the instrument truck, and it is the main control unit of the whole digital seismic recorder. The hardware comprises server, switch, PC, storage device, plotting equipment, GPS, etc. The software comprises operation system software, control operation software, etc. The CCOS is connected with the RU through a 10-gigabit network line or a number of binding gigabit network lines. The server can adopt two Sugon's PHPC100 high-performance computers with each normatively comprising five sets of PHPC100 computing modules, 10 multi-core CPU, 160G internal memory, and five 146G SAS hard disks, moreover, each computer can achieve 3+1 redundant power supply configuration. The switch is a 12-ports high-performance switch. The PC is the industrial control computer comprising a 24-inch screen. The disk array is a 10T RAID5 small disk array. The magnetic tape unit can be IBM3590 magnetic tape unit.

The RU (see Fig.3) in the digital seismic recorder of the invention comprises a switch module (SM), a control module (CM), an interface to control explosive source (ICES), a power module (PM), an interface for auxiliary channels, a GPS module, etc. The high-speed SM adopts different configurations in the case of different channels. E.g. a 10-gigabit SM with twelve ports is adopted to connect with the CCOS through a 10-gigabit network line in case of 1 million channels, and 10 gigabit cable interfaces are provided to connect with the field ground equipment such as the NUS and so on. A gigabit SM with more than four ports is adopted to connect with the CCOS through two bound gigabit network lines in case of 200000 channels, and two gigabit cable interfaces are provided to connect with the field ground equipment such as the NUS and so on, and the rest situation can be figure out on the same way. The CM adopts the CPU of PowerPC with IEEE1588 protocol, and performs control to the high-speed SM, the ICES and the IAC based on the command of the CCOS. And the PM provides power support to each module.

The data flow of the seismic apparatus is determined by the number of acquisition channel and the sampling rate. Herein 1 million channels and sampling rate of 2ms are adopted as the example for calculating the real-time data flow of the million-channel digital seismic recorder. Under the sampling rate of 2ms, 500 sampling points can be achieved each second, and each data is sampled based on 20 bits, so the data flow of 1-million channel digital seismic recorder per second is 10-gigabit/s, which is shown as:

$$\text{Total data flow} = \text{total number of channels} \times \text{number of sampling points per second} \times \text{bit per sampling point} = 1{,}000{,}000 \times 500 \times 20 = 10{,}000{,}000{,}000.$$

As a result, the RU connected with the CCOS through a 10-gigabit network line and connected with the filed ground equipment such as NUS through 10 sets of gigabit fiber optical cable interfaces can basically meet the requirement of data transmission of the seismic recorder while acquiring at 1-million channels and 2ms sampling rate.

The NU (see Fig.4) in the digital seismic recorder of the invention comprises the high-speed SM, the CM, the PM, the GPS module, etc. SM is 100-Mbit/ gigabit switch module. The NU is respectively connected with previous NU and the next NU through the gigabit interface, and connected with the PU through the 100 Mbit interface. The NU has two power supply modes: one is to supply power by directly connecting battery; and another is to supply power through PU by connecting through special NL. (See Fig.4) CM can adopt the CPU of PowerPC with the IEEE1588 protocol, such as PowerPC 8313.

The NUS (see Fig.1) in the digital seismic recorder of the invention is formed by connecting a number of the NU in series through the FL, and it is connected with the RU. The RU can be connected with one or more NUS to form a backbone network for data transmission of the million-channel digital seismic recorder system.

The PU (see Fig.5) in the digital seismic recorder of the invention comprises the CM, the PM, the GPS module, etc. The CM has a 100 Mbit interface for connecting the NU through NL, and it adopts a (special) NL to supply power to the NU. The CM has two special communication interfaces to connect the previous AS and the next AS respectively.

The AL (see Fig.1) in the digital seismic recorder of the invention can be formed by either connecting the PU and AS or connecting the AS in series. The PU on the AL provides power supply to the AU at two sides. The maximum number of the AU between two PU is determined by the power supply capability of the PU. In the system, the PU supplies power to the AU by raising the voltage of the power supply storage battery from 12V to 48-72V. Considering of the line loss, the power voltage of the AU is ranged from 24 to 72V In the system, about 60 to 180 AU are linked between two power stations.

The AS in the digital seismic recorder of the invention is formed by connecting a number of acquisition units (AU) (6 to 12 AU are usually arranged for conveniently carrying in the field). The AU acquires the signal of the digital geophone, and performs communication and data transmission through the special communication interface.

The AU (Fig.6) in the digital seismic recorder of the invention comprises the CM, the PM, the GPS module, etc. The CM has two special communication interfaces for connecting the previous AU and the next AU, and provides a special interface for connecting common geophone or MEMS and other similar sensors. The power is remotely supplied through the PU by using the communication interface under the "ghost pair" mode. The PM converts the supplied voltage 24-72V into various voltages as the AU required (the power voltage will be reduced along with the distance of power supply due to the line loss, so the minimum power voltage of the AU is set as 24V).

The digital seismic recorder of the invention adopts the mode of connecting NU and the PU through the special NL to connect the NU in the NUS to any NU on the AL, thus, the layout flexibility of the field acquisition equipment can be greatly improved.

The layout flexibility of field acquisition equipment can be improved by connecting a number of NU of one NUS and a number of PU on one AL under the optimization of control mode, or connecting a number of NU of many NUS and a number of PU on one AL. The data flow of the AL can be raised and as a result, the connection length of AL can be increased.

The features of data transmission of million-channel digital seismic recorder are fully considered. Different computer networks are utilized to meet the different transmission requirement of data, so the whole frame has a flexible design, moreover, and many survey line layout programs of 3-D seismic exploration can be designed. The following describes a layout method at a completely flat field in case of million-channels:

● Each ΔL includes 2000 AU, so 500 ΔL are required (field survey line);

● The RU is connected with ten fiber optic cables, that is ten NUS. Each NUS is connected in series with 50 NU, and which connected with 50 AL. The data flow of each NUS is 1Gb/s;

Data flow of NUS= number of AL × number of channels/survey line × number of sampling points/ second × bit/sampling point

$$= 50×2000×500×20 = 1,000,000,000 （b/s） = 1Gb/s.$$

● It is proposed to set 10 AU for each AS, and ten AS (100 AU) can be connected between two PU, thus, each AL needs 20 PU for supplying power to 2000 AU. 500 AL needs 10000 PU for supplying power.

● It is proposed to set the distance (named as channel interval in field) of the AU is 10m, and the distance (named as line distance in field) of AL is 40m, about 20km×20km=400km$^2$ earth surface can be covered on the layout above; and about 10km×10km=100km$^2$ underground structure can be covered under once shooting.

**Claims**

1. A novel million-channel digital seismic recorder based on a computer network, **characterized in that** the hardware comprising seven kinds of units inclusive of the central control operation system (CCOS), the root unit (RU), the network unit (NU), the power unit (PU), the acquisition string (AS),the fiber line (FL) and the network line (NL), wherein the CCOS is the control centre and the data retrieving centre of the whole apparatus; the RU is the interface for connecting the CCOS and the field equipment; a number of NU are connected in series with the FL to form a network unit string (NUS), the RU is connected with one or more NUS; the PU and the AS are randomly connected in series to form the AL, any PU on the AL is connected to the NU through a 100 Mbit NL. And the above-mentioned field equipment includes the NU, the PU, the AS and the FL.

2. The seismic recorder according to claim 1, **characterized in that** the CCOS mainly performs functions of human-computer interaction, layout control, acquisition synchronizing, data retrieve and quality control.; the CCOS is the main control unit of the whole digital seismic recorder, wherein the hardware mainly comprises a server, a switch, PCs, a storage device, plotting equipment and a GPS and software mainly comprises operation system software and control operation software; the RU and the CCOS are connected through a 10-gigabit network line or a number of bound gigabit network lines.

3. The seismic recorder according to claim 1, **characterized in that** the RU comprises a high-speed switch module (SM), a control module (CM), an interface to control explosive source (ICES), a power module (PM), an interface for auxiliary channels (IAC) and a GPS module; the RU is connected with the CCOS through a 10-gigabit network line or a number of bound gigabit network lines, and it provides 2 to 10 sets of gigabit optical cable interfaces for connecting the field ground equipment inclusive of NUS according to the capacity of the instrument; the high-speed SM performs data switching; the CM performs control to the high-speed SM, the ICES and the IAC according to the command of the CCOS; and the PM provides power support to each module.

4. The seismic recorder according to claim 1, **characterized in that** the NU comprising the high-speed SM, the CM, the PM and the GPS module; wherein the SM is 100-Mbit/gigabit switch module, and the gigabit interface is respectively connected with the previous NU and the next NU; the 100 Mbit interface is connected with the PU; the NU having two power supply modes: one is to supply power by directly connecting battery, and another one is to supply power through the PU by connecting through the special NL.

5. The seismic recorder according to claim 1, **characterized in that** the NUS is formed by connecting a number of the NU in series through the FL, and it is connected with the RU; RU is connected with one or more NUS to form a backbone network for data transmission of the million-channel digital seismic recorder system.

6. The seismic recorder according to claim 5, **characterized in that** the layout flexibility of field acquisition equipment can be improved by connecting a number of network units NU of one NUS to a number of PU on one AL, or connecting a number of NU of many NUS and a number of PU on one AL; in above way, the data flow of AL can be raised and as a result, the connection length of the AL can be enlarged.

7. The seismic recorder according to claim 1, **characterized in that** the PU comprising the CM, the PM and the GPS module; the CM having a 100 Mbit interface for connecting the NU and supplying power to the NU through NL, and the CM having two special communication interfaces for connecting the previous AS and the next AS respectively.

8. The seismic recorder according to claim 1, **characterized in that** the AL being formed by connecting the PU and the AS or connecting the AS and the AS in series.; the PU on the AL provides power supply to the AU at two sides and the maximum number of AU between two PU is determined by the power supply capability of the PU;
the PU supplies power to the AU by raising the voltage of the power supply battery from 12V to 48-72V; the power voltage of the AU is ranged from 24 to 72V due to line loss.

9. The seismic recorder according to claim 1, **characterized in that** the AU mainly comprises the CM, the PM and the GPS module; wherein the CM having two special communication interfaces for connecting the previous AU and the next AU,respectively, and provides a special interface for connecting common geophone or the MEMS or the similar sensor; the power is remotely supplied through the PU by using the communication interface under the "ghost pair" mode; and the PM converts the supplied voltage 24-72V into various voltages as the AU required.

10. The seismic recorder according to claim 1 or 2 or 3 or 4 or 5 or 6 or 7 or 8 or 9, **characterized in that** the AS being formed by connecting a number of AU through cables, and the AU acquires the signal of the digital geophone, and performs communication and data transmission through the special communication interface.

Fig. 1

Fig. 2

Fig. 3

Fig. 4

Fig. 5

Fig. 6

# INTERNATIONAL SEARCH REPORT

| International application No. |
|---|
| **PCT/CN2012/000831** |

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: G01V, H04L

Documentation searched other than minimum documentation to the extent that such documents are included in the fields searched

Electronic data base consulted during the international search (name of data base and, where practicable, search terms used)

CNPAT, CNKI, EPODOC, WPI: GUO, Jian; LIU, Guangding; XU, Shanhui; LIU, Ning; seism　power source　acquisition seismograph seismic network power electrical

## C. DOCUMENTS CONSIDERED TO BE RELEVANT

| Category* | Citation of document, with indication, where appropriate, of the relevant passages | Relevant to claim No. |
|---|---|---|
| P, X | CN 102213768 A (INSTITUTE OF GEOLOGY AND GEOPHYSICS, CHINESE ACADEMY OF SCIENCES et al.), 12 October 2011 (12.10.2011), description, paragraphs 0045-0063, and figures 1-10 | 1-10 |
| A | CN 101923174 A (SERCEL), 22 December 2010 (22.12.2010), the whole document | 1-10 |
| A | CN 1417593 A (BUREAU OF GEOPHYSICAL PROSPECTING, CNPC), 14 May 2003 (14.05.2003), the whole document | 1-10 |
| A | US 2009/0225629 A1 (RAY, C.H.), 10 September 2009 (10.09.2009), the whole document | 1-10 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 September 2012 (03.09.2012) | **20 September 2012 (20.09.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **FENG, Tingting** Telephone No.: (86-10) **62414062** |
|---|---|

Form PCT/ISA/210 (second sheet) (July 2009)

## INTERNATIONAL SEARCH REPORT
Information on patent family members

| | International application No. |
|---|---|
| | PCT/CN2012/000831 |

| Patent Documents referred in the Report | Publication Date | Patent Family | Publication Date |
|---|---|---|---|
| CN 102213768 A | 12.10.2011 | None | |
| CN 101923174 A | 22.12.2010 | EP 2189817 A1 | 26.05.2010 |
| | | FR 2938928 A1 | 28.05.2010 |
| | | US 2010128564 A1 | 27.05.2010 |
| | | CA 2686300 A1 | 25.05.2010 |
| | | RU 2009143589 A | 27.05.2011 |
| | | US 2012106296 A1 | 03.05.2012 |
| CN 1417593 A | 14.05.2003 | None | |
| US 2009/0225629 A1 | 10.09.2009 | WO 2010105104 A2 | 16.09.2010 |

Form PCT/ISA/210 (patent family annex) (July 2009)

## INTERNATIONAL SEARCH REPORT

| International application No. |
| --- |
| **PCT/CN2012/000831** |

**A. CLASSIFICATION OF SUBJECT MATTER**

G01V 1/18 (2006.01) i

G01V 1/22 (2006.01) i

Form PCT/ISA/210 (extra sheet) (July 2009)